# EUROPÄISCHE PATENTSCHRIFT

(11) **EP 0 499 947 B1**
(45) Veröffentlichungstag und Bekanntmachung des Hinweises auf die Patenterteilung: **09.11.1994**
(21) Anmeldenummer: 92102248.9
(22) Anmeldetag: 11.02.1992
(51) Int. Cl.: B60T 8/66

(54) **Verfahren zur Ermittlung der Geschwindigkeit eines Fahrzeuges mit schlupfgeregelten Rädern**
Method for the determination of the speed of a vehicle with slip-controlled wheels
Procédé pour la détermination de la vitesse d'un véhicule avec des roues avec contrôle du patinage

(30) Priorität: 13.02.1991 DE 4104775
(43) Veröffentlichungstag der Anmeldung: 26.08.1992
(73) Patentinhaber: KNORR-BREMSE AG, 80710 München (DE)
(72) Erfinder: Heller, Martin, Dr., O-1152 Berlin (DE)

(56) Entgegenhaltungen:
- EP-A- 0 152 602
- DE-A- 3 731 075

## Beschreibung

Die Erfindung betrifft ein Verfahren zur Anwendung für Fahrzeuge, die mit einer Einrichtung zur Regelung des Antriebs- oder Bremsschlupfes der Räder ausgerüstet sind. Diese Fahrzeuge weisen Meßmittel zur Ermittlung der Drehfrequenz bzw. Geschwindigkeit der Räder, Einrichtungen zur Verarbeitung der Meßwerte sowie Stellglieder zur Beeinflussung des Bewegungszustandes der Räder auf, nicht jedoch Meßmittel zur unmittelbaren Messung der Fahrgeschwindigkeit, z. B. Radargeräte.

Es entspricht dem bekannten Stand der Technik, daß es im Bewegungsverhalten der Räder eines Fahrzeuges, die z.B. mit einem Antiblockierregelsystem ausgerüstet sind, Instabilitätsphasen gibt, in denen die Räder vom stabilen Rollen mit geringem Schlupf in größeren Schlupf übergehen. Durch die Aufgabenstellung, den Schlupf der Räder so zu regeln, daß ein optimaler Haftwert zwischen Rad und Fahrbahn erzielt wird, entsteht die Notwendigkeit, die tatsächliche Fahrzeuggeschwindigkeit insbesondere in den Instabilitätsphasen zu kennen, um einem Sollwert der Radgeschwindigkeit vorgeben zu können, der einem definierten Schlupf entspricht. Da die an den schlüpfenden Rädern gemessene Geschwindigkeit nicht der Fahrzeuggeschwindigkeit entspricht und unabhängige Meßmittel nicht vorhanden sind, fehlt jedoch eine Zugriffsmöglichkeit zur Fahrzeuggeschwindigkeit.
Es ist bekannt, z.B. durch DE 37 07 235, daß auf dem Fahrzeug ein Fahrzeugverzögerungsgeber vorhanden ist, der einen oder mehrere empirisch festgelegte Werte einer Fahrzeugbeschleunigung liefert, wobei angenommen wird, daß sich das Fahrzeug während der Instabilitätsphasen mit dieser Beschleunigung bewegte. Mit diesem Wert kann ein angenommener Wert der Fahrzeuggeschwindigkeit berechnet werden, indem sie ausgehend von einem Wert vor Beginn der Instabilitätsphase extrapoliert wird. Bei Fahrzeugbeschleunigungsgebern mit mehreren Werten sind Einrichtungen vorgesehen, die eine Umschaltung von einem auf einen anderen Wert vornehmen, wenn angenommen wird, daß die äußeren Bedingungen zu einer bestimmten Fahrzeugbeschleunigung führen. Bei gebremsten Schienenfahrzeugen ist eine Umschaltung z. B. angezeigt, wenn zusätzlich zur normalen Bremsung eine haftwertunabhängige Bremse (Magnetschienenbremse) zugeschaltet wird.

Diese Verfahrensweise weist folgende Nachteile auf:
Die Werte der Fahrzeugbeschleunigungsgeber müssen so gewählt werden, daß sie typischen Betriebsfällen entsprechen. Weiterhin müssen sie einen Sicherheitszuschlag erhalten, der z. B. bei einer Bremsschlupfregelung verhindern muß, daß die berechnete Fahrzeuggeschwindigkeit größer als die tatsachliche ist, da ein Antiblockierregelsystem in diesem Fall eine Aufhebung der Bremsung und damit eine Gefahrensituation verursachen würde. Als Folge davon werden die extrapolierten Geschwindigkeitswerte kleiner als die tatsachliche Geschwindigkeit, so daß auch die Räder auf eine zu kleine Geschwindigkeit bzw. auf einen zu großen Schlupf eingeregelt werden. Dies kann bei größeren Zeitabschnitten der Extrapolation bis zum vollständigen Blockieren führen. Deshalb muß zuvor eine willkürliche stärkere Entbremsung eines Rades vorgenommen werden, damit ein neuer Anfangswert der Extrapolation geschaffen wird. Sowohl durch den zu großen Schlupf als auch durch diese Entbremsung tritt ein Verlust an übertragbarer Bremsleistung ein.
Ebenso nachteilig ist die Verfahrensweise des Umschaltens von Beschleunigungsgebern. Erstens sind zusätzliche technische Mittel für diese Umschaltung erforderlich, zweitens kann nur bei einzeln fahrenden Fahrzeugen mit einiger Wahrscheinlichkeit angenommen werden, daß bestimmte äußere Bedingungen der Erzeugung der Bremsleistung auch eine typische (negative) Fahrzeugbeschleunigung hervorrufen. Bei Fahrzeugverbänden, die bei Schienenfahrzeugen die Regel sind, gibt es keine Gewähr dafür, da der Verband inhomogen sein kann und sich trotz sehr hoher Bremsleistung an einem Rad bzw. einer Achse nur eine geringe Fahrzeugbeschleunigung einstellt, wenn durch weniger gebremste Fahrzeuge entsprechende Kupplungskräfte erzeugt werden.

Zur Abschwächung dieser Nachteile ist z. B. durch DE 37 06 514 vorgesehen, die Fahrzeugverzögerung permanent aus der mittleren Steigung der Referenzgeschwindigkeitsgröße während der Instabilitätsphasen auszunutzen. Hierbei steht zu Beginn der Instabilitätsphasen ein genauer Wert der Fahrzeugverzögerung (d. h. der Betrag einer negativen Beschleunigung) zur Verfügung. Nachteilig ist hier jedoch, daß ebenso wie bei dem zuvor beschriebenen Verfahren während diese Instabilitätsphase keine neuen Informationen aus der Messung der Radgeschwindigkeiten zur Verfügung stehen und daß deshalb die Annahme getroffen werden muß, daß die zeitlich zurückliegende Information während der Instabilitätsphase verläßlich genutzt werden kann. Infolgedessen ist wiederum ein Sicherheitszuschlag erforderlich, der zu den oben beschriebenen Nachteilen führt. Insbesondere versagt das Verfahren, wenn während der Instabilitätsphasen eine plötzliche Veränderung der Bremsung bzw. des Antriebs eintritt, die eine größere Verzögerung oder Beschleunigung des Fahrzeugs ermöglichen, denn die Informationen, die in diesem Verfahren zur Berechnung der Fahrzeugverzögerung verwendet werden, werden dem zurückliegenden Verlauf dieser selbst entnommen, so daß sich ein einmal aufgetretener Fehler ständig reproduziert und verstärkt.

Zusammengefaßt ist deshalb zu sagen, daß das Problem der Geschwindigkeitsermittlung bei schlüpfenden Rädern nicht ausreichend gelöst ist. Dies ist umso nachteiliger, da zur Erzielung kurzer Bremswege ein möglichst permanenter begrenzter Schlupf der Räder eingestellt werden soll, wodurch die Trennung in instabile und stabile Phasen nicht mehr möglich ist.

Ziel der Erfindung ist ein Verfahren, das eine kontinuierliche Regelung des Schlupf es der Räder eines gebremsten oder angetriebenen Fahrzeuges gestatten und damit die optimale Ausnutzung eines an sich unzureichenden Haftwertes Rad/Fahrbahn sichert.

Aufgabe der Erfindung ist es, durch Aufnahme von Informationen über den Bewegungszustand der schlüpf enden Räder eine Möglichkeit zu schaffen, Fahrgeschwindigkeit des Fahrzeuges zu ermitteln, ohne auf Annahmen über die Beharrung des Fahrzeuges in einem bestimmten Zustand angewiesen zu sein und deshalb die Genauigkeit der Geschwindigkeitsermittlung beeinträchtigende Sicherheitswerte verwenden zu müssen.

Erfindungsgemäß wird die Aufgabe dadurch gelöst, daß zyklisch folgende Verfahrenschritte abgearbeitet werden:
1. Aus den gemessenen Geschwindigkeiten der Räder wird unter Einbeziehung einer Dämpfung je eine erste Radbeschleunigung ermittelt.
2. Aus dieser ersten Beschleunigung wird je eine zweite gebildet, indem nur der Anteil dieser verwendet wird, der die Bedingung erfüllt, daß ein positiver oder ein negativer Grenzwert einer Beschleunigungsänderung im Bezug auf einen zeitlich zurückliegenden Wert einer Fahrzeugbeschleunigung nicht überschritten wird.
3. Aus den zweiten Beschleunigungswerten aller Räder wird durch Mittelwertbildung eine angenommene Fahrzeugbeschleunigung ermittelt.
4. Durch Integration der angenommenen Fahrzeugbeschleunigung wird ein Wert für eine angenommene Fahrzeuggeschwindigkeit erzeugt.
5. Durch Auswertung der gemessenen Radgeschwindigkeiten wird festgestellt, ob diese den Tendenzen der angenommenen Fahrzeuggeschwindigkeit bzw. -beschleunigung folgen und bei Notwendigkeit werden Korrekturen der angenommenen Werte eingeleitet.

Das erfindungsgemäße Verfahren soll im folgenden an einem Ausführungsbeispiel näher erläutert werden. Das Ausführungsbeispiel bezieht sich auf ein vierachsiges Schienenfahrzeug, bei dem der Bremsschlupf geregelt wird. Der Begriff ''Beschleunigung'' wird im folgenden durch ''Verzögerung'' ersetzt, worunter der absolute Betrag einer negativen Beschleunigung zu verstehen ist.
Das Fahrzeug ist mit einer Gleitschutzanlage üblicher Bauart ausgerüstet, die als Einrichtung zur Abarbeitung der Verfahrensschritte dient.
Gleichzeitig werden die Verfahrensschritte der Gleitschutzregelung abgearbeitet, deren Wirkungsweise als bekannt vorausgesetzt wird. Dabei werden Signale für die Momentangeschwindigkeiten der Räder erzeugt, die als Eingangsinformation des Verfahrens zur Ermittlung der Geschwindigkeit dienen, Die ermittelte Geschwindigkeit des Fahrzeuges dient wiederum als Eingangsinformation der Gleitschutzregelung und gestattet deren Ablauf mit einer erhöhten Genauigkeit.

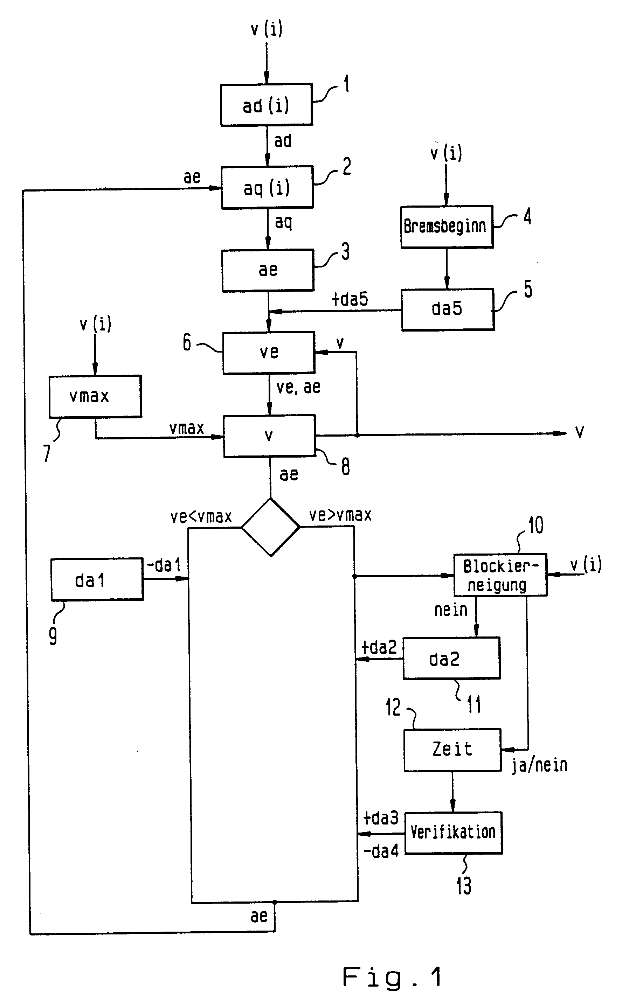

Figur 1 zeigt ein Schema für den Ablauf der Verfahrensschritte.
Dargestellt sind Blöcke 1 ... 13. Die Blöcke sind die für die Abarbeitung des Verfahrens notwendigen Funktionseinheiten, die einen Teil der Gleitschutzanlage bilden. Im Beispiel ist dieser Teil eine digitale Schaltung, die Blöcke sind logische, jedoch keine physischen Elemente, Sie sind durch Signalleitungen verbunden, die kodierte Werte der Bewegungsgrößen und andere Informationen weitergeben.

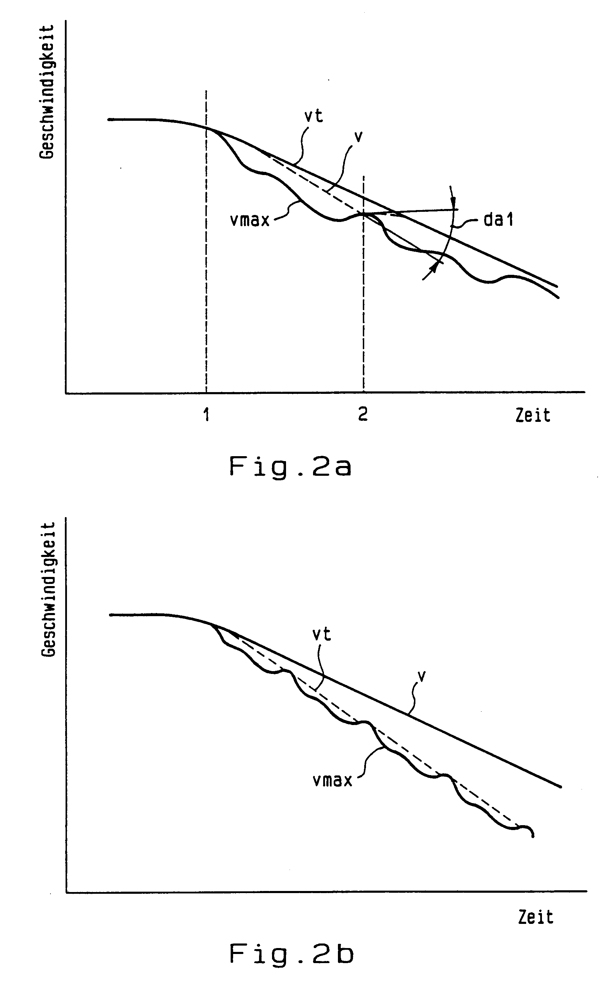

Figur 2 ... 4 zeigen Beispiele von Bewegungsabläufen, die durch die Wirkung des Verfahrens eintreten können.

Das Verfahren beinhaltet, daß die in Figur 1 dargestellten Blöcke in regelmäßigen Abständen zyklisch in Aktion treten und dabei die Verfahrensschritte abarbeiten.
Der Ablauf der einzelnen Verfahrensschritte ist folgender:
1. In einem ersten Verfahrensschritt werden die Signale der Momentangeschwindigkeit v(i) je Radsatz dem Block 1 zugeführt und hier in gedämpfte Verzögerungswerte ad(i) (i = 0 ... 3) umgewandelt, indem der Gradient zwischen zwei mittleren Geschwindigkeitswerten aus je einem weiter zurückliegenden und einen unmittelbar vergangenen Zeitintervall gebildet wird. Die Größe des Intervalls ist so bemessen, daß der zyklische Durchlauf der Verfahrensschritte in ihnen mehrmals erfolgt. Durch dieses Bildungsverfahren wird gesichert, daß fehlerhafte Geschwindigkeitsmeßwerte unbeachtet bleiben` Gleichzeitig entsteht eine Zeitverzögerung in der Beschleunigungsermittlung, die durch die Wahl der Zeitintervalle auf ein für die Funktion des Verfahrens unbedingt notwendiges Maß begrenzt ist.
2. Der zweite Verfahrensschritt beinhaltet die Bildung je einer zweiten Verzögerung aq(i) (i = 0 ... 3) in Block zwei. Dazu wird ein Vergleich mit einem zeitlich zurückliegenden und korrigierten Wert einer angenommenen Fahrzeugverzögerung ae durchgeführt und die zweiten Verzögerungen aq(i) aus den gedämpften Verzögerungen ad(i) so festgelegt, daß sie maximal um eine untere Differenz du oder eine obere Differenz do von dem Wert ae abweichen.
3. Im dritten Schritt werden die zweiten Verzögerungswerte aq(i) in Block 3 eingeleitet und durch Mittelwertbildung ein vorläufiger Wert der angenommenen Fahrzeugverzögerung ae gebildet.

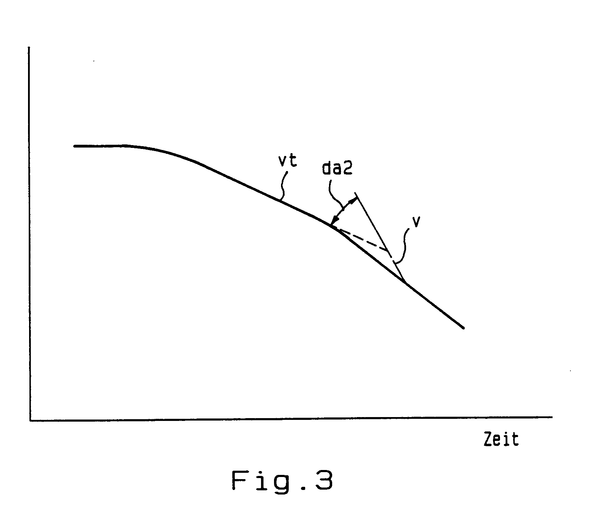

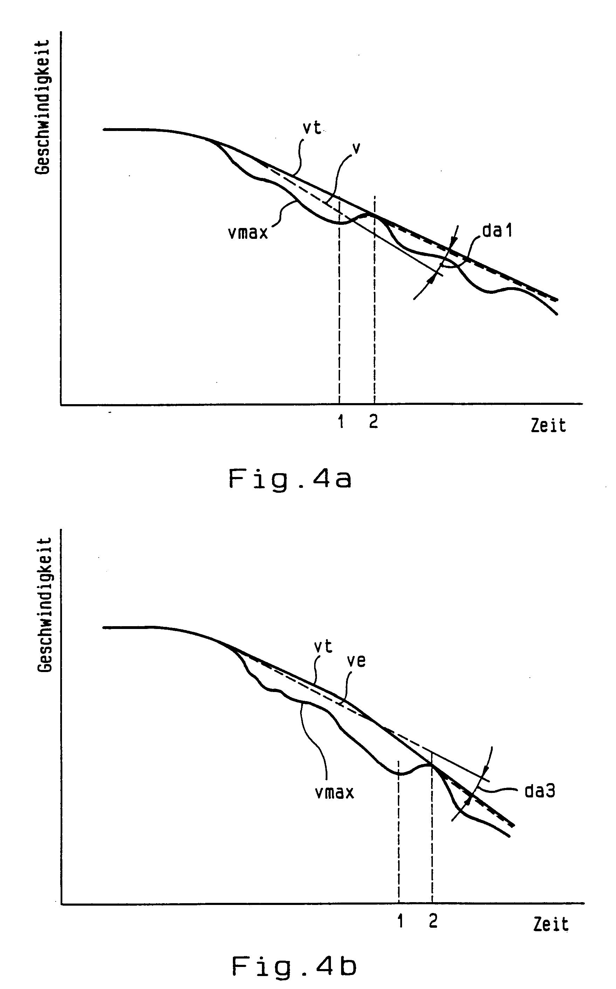

Diese Verfahrensschritte haben die Wirkung, daß eine plötzliche Verzögerung einer Achse infolge Übergangs vom stabilen Rollen ins Gleiten oder umgekehrt einen geringen Fehler in die Berechnung der Fahrzeug-Ersatzverzögerung einbringt, da diese Vorgänge, außer bei Bremsbeginn, bei den Achsen nicht synchron erfolgen. Tritt jedoch eine tatsächliche plötzliche Veränderung der Fahrzeugverzögerung ein, dann folgt die angenommene Fahrzeugverzögerung dieser Änderung.
4. Für den vierten Verfahrensschritt wird die Information über die angenommene Fahrzeugverzögerung ae in Block 6 eingeleitet und dort durch Integration in die angenommene Fahrzeuggeschwindigkeit ve umgewandelt. Als Anfangswert dient dabei die ggf. korrigierte angenommene Fahrzeuggeschwindigkeit aus den vorangegangenen Durchläufen des Verfahrens.
5. Der fünfte Verfahrensschritt beinhaltet die Korrekturen der angenommenen Werte bzw. des tatsächlichen Bewegungsablaufes. Dazu sind folgende Varianten vorgesehen:
   a) Durch Block 4 wird festgestellt, ob eine Bremsung beginnt. Dazu werden die Radgeschwindigkeiten v(i) in den Block eingeleitet und differenziert. Die Differenzenquotienten werden mit einem Schwellwert und untereinander verglichen. Treten Abweichungen auf, dann liegt ein Bremsbeginn vor. Da die angenommene Fahrzeugverzögerung ae gedämpft ist, kann sie bei der Berechnung in Block 3 einem plötzlichen Bremsbeginn nicht schnell genug folgen. Durch den Korrekturzuschlag da5 (Block 5) wird diese Abweichung beseitigt.
   b) Durch Block 7 wird die größte Radgeschwindigkeit vmax ermittelt und in Block 8 mit der angenommenen Fahrzeuggeschwindigkeit ve verglichen. Ist vmax größer, dann wird ve korrigiert, indem eine Anhebung bis auf vmax erfolgt. Der so korrigierte Wert ist die ermittelte Fahrzeuggeschwindigkeit v, der für die Gleitschutzregelung zur Verfügung gestellt wird. Wesentlich für das Verfahren ist jedoch nicht die Korrektur von ve, sondern die exakte Annäherung der angenommenen Fahrzeugbeschleunigung ae an die tatsächlichen Verhältnisse.
      Deshalb erfolgt jetzt die Aktivierung von Block 9, der den Wert von ae um einen Korrekturwert dal vermindert, so daß bei den folgenden Durchläufen des Verfahrens keine Abweichung von ve mehr auftritt. Der diesem Fall zugrunde liegende Bewegungsablauf ist in Figur 2a dargestellt. Gezeigt ist eine Bremsung, bei der die tatsächliche Fahrzeuggeschwindigkeit vt und die ermittelte Fahrzeuggeschwindigkeit v zunächst gemeinsam absinken. Der schnellste Radsatz geht zu einem Zeitpunkt 1 in den Schlupf, so daß seine Geschwindigkeit vmax stärker absinkt. Wenn gleichzeitig auch die anderen Radsätze ihren Schlupf vergrößern, kann es zu einer fehlerhaft zu groß angenommenen Fahrzeugverzögerung ae bzw. zu kleinen Fahrzeuggeschwindigkeit ve kommen. Aus zufälligen Gründen tritt in Punkt 2 eine Wiederbeschleunigung des schnellsten Radsatzes ein, so daß der Zustand vmax > ve entsteht. Dieser wird sofort in Block 7 und 8 korrigiert, so daß er im Diagramm praktisch nicht auftritt. Ebenfalls in Punkt 2 erfolgt die Korrektur von ae, wobei der Korrekturwert dal in Diagramm durch eine sprunghafte Änderung des Gradienten der Geschwindigkeitslinie ve erkennbar ist. Damit wird die Tendenz zu einer erneuten Fehlerentstehung beseitigt. Der Sinn dieser Korrektur wird durch Vergleich mit Figur 2b verdeutlicht, die den Verlauf einer möglichen Bewegung ohne ständige Anpassung der angenommenen Fahrzeugverzögerung ae darstellt. Durch den ungünstigen Betriebsfall, bei dem mehrere Wiederbeschleunigungen des schnellsten Radsatzes zu einer Anhebung der angenommenen Fahrzeuggeschwindigkeit führen, ohne daß dabei stabiles Rollen erreicht wird, kommt es zur ständigen Vergrößerung des Fehlers, der bis zur Gefahr eines vollständigen Blockierens führen kann.
   c) Ist die angenommene Fahrzeuggeschwindigkeit ve größer als die größte Radgeschwindigkeit vmax, wird zunächst Block 10 aktiviert. Dieser prüft durch Auswertung der vier Radgeschwindigkeiten v(i) auf ähnliche Weise wie Block 4, ob an den Achsen eine Blockierneigung besteht. Ist das nicht der Fall, dann muß eine Korrektur der angenommenen Fahrzeugverzögerung ae durch den Zuschlag da2 (Block 11) erfolgen. Dieser Vorgang ist in Figur 3 dargestellt.
      Die Möglichkeit dieses Schrittes stellt eine Sicherheitsmaßnahme gegen eine zu hohe angenommene Fahrzeuggeschwindigkeit ve dar, da diese eine Aufhebung der Bremswirkung zur Folge haben kann. Praktisch kann bei fehlender Blockierneigung ae bereits in Block 3 sehr genau ermittelt werden und die beschriebene Korrektur wird nur in Extremfällen benötigt, wenn z.B. während einer bereits begonnenen Bremsung eine plötzliche Vergrößerung der Verzögerung durch den Einsatz einer haftwertunabhängigen Bremse stattfindet.
   d) Im verbleibenden Fall, d.h. bei Blockierneigung gibt es zunächst keinen Anhaltspunkt, daß die angenommenen Werte ve und ae korrigiert werden müssen, jedoch auch keine Bestätigung ihrer Richtigkeit. Aufgrund des Bildungsgesetzes der Verzögerungswerte aq(i) im zweiten Schritt kann sich eine Abweichung nur so langsam herausbilden, wie durch die gewählten Differenzwerte du und do vorbestimmt ist. Diese sind Grenzwerte der bei Bremsungen zu erwartenden zeitlichen Beschleunigungsänderung (Ruck) und sind niedrig angesetzt, da bei Druckluftbremsen nur langsame Bremskraftänderungen auftreten können und Sonderfälle (plötzliche Sprünge der Haftwerte, der Kupplungskräfte oder Einsatz haftwertunabhängiger Bremsen) durch die vorgesehenen Korrekturmöglichkeiten ausgeglichen werden. Damit diese Korrekturmöglichkeiten auch bei anhaltenden Schlupfphasen einsetzen können, sind in bestimmten zeitlichen Abständen Verifikationen der angenommenen Werte vorgesehen.
      Zu diesem Zweck dient Block 12, der die Zeit mißt, in der die schnellste Radgeschwindigkeit vmax kleiner als die angenommene Fahrzeuggeschwindigkeit ve ist. Nach einer bestimmten Zeit wird Block 13 angesteuert, der eine Verifikation der angenommenen Werte ausführt. Dieser Vorgang ist in Figur 4a dargestellt. Der Zeitpunkt der Ansteuerung von Block 13 ist mit 1 gekennzeichnet. Block 13 korrigiert ve durch Gleichsetzung mit der Geschwindigkeit eines Rades, das kurzzeitig in den Zustand des stabilen Rollens überführt wird (Punkt 2). Die Gleichsetzung dient vorrangig dazu, eine Korrektur der angenommenen Verzögerung zu ermöglichen. Dazu prüft Block 13, ob die Gleichsetzung mit einer Erhöhung oder einer Verminderung von ve verbunden ist. In Abhängigkeit davon wird die Korrektur der angenommenen Fahrzeugverzögerung ae ausgeführt, damit die Tendenz zur Entstehung einer erneuten Abweichung von ve beseitigt wird. Hierbei sind wiederum zwei Fälle möglich.
      Wie in Figur 4a dargestellt ist, kommt es in der Regel zu einer Anhebung von ve. Dabei ist es erforderlich, das von der angenommenen Fahrzeugverzögerung ae ein Korrekturwert da4 abgezogen wird. Der zweite Fall (Figur 4b) tritt ein, wenn während der Schlupfphase eine plötzliche starke Erhöhung der Fahrzeugverzögerung, z.B. durch Einsatz von hartwertunabhängigen Bremsen eintritt. Die Gleichsetzung von ve und vmax bedeutet hier eine Verminderung von ve. Deshalb wird ein Korrekturwert da3 zur angenommenen Fahrzeugverzögerung addiert.

Durch die Genauigkeit der Bestimmung der angenommenen Fahrzeugverzögerung ae in Block 3 in Verbindung mit den Korrekturschritten bilden sich Abweichungen der angenommenen Fahrzeuggeschwindigkeit von der tatsächlichen nur sehr langsam und in geringer Größe aus, so daß die Radgeschwindigkeiten stets im Bereich des optimalen Haftwertes gesteuert werden können. Die bei den seltenen Verifikationen erforderlichen Überführungen einer Achse in das stabile Rollen ist mit einer nur geringen Entbremsung verbunden. Dabei ist die Korrektur der angenommenen Fahrzeuggeschwindigkeit betragsmäßig so gering, daß sie keine Entbremsung aller Achsen zur Folge hat.
Eine Entbremsung der Achsen durch eine zu groß angenommene Fahrzeuggeschwindigkeit wird durch das Verfahren ausgeschlossen.

Diese Vorteile haben zur Folge, daß ein kurzer Bremsweg bei größtmöglicher Schonung der Räder ermöglicht wird.

## Patentansprüche

1. Verfahren zur Ermittlung der Geschwindigkeit eines Fahrzeuges mit schlupfgeregelten Rädern mit den Schritten:
- Ermittlung der Momentangeschwindigkeit (v(i)) der Räder
- Auswertung und Speicherung der Momentangeschwindigkeiten (v(i)) und daraus abgeleiteter Bewegungsgrößen
- Ermittlung des Radschlupfes
- Steuerung eines Drehmomentes an den Rädern zur Einstellung eines gewünschten Radschlupfes
gekennzeichnet durch folgende Verfahrensschritte :
- Bildung von ersten Radbeschleunigungen (ad(i)) aus den gefilterten Momentangeschwindigkeiten (v(i)),
- Bildung von zweiten Radbeschleunigungswerten (aq(i)) aus den ersten durch die Bedingung, daß deren Änderung in Bezug auf einen zeitlich zurückliegenden Wert einer angenommenen Fahrzeugbeschleunigung (ae) einen positiven und einen negativen Grenzwert nicht überschreitet,
- Bildung der angenommenen Fahrzeugbeschleunigung (ae) durch Mittelwertbildung aus den zweiten Radbeschleunigungswerten (aq(i)) aller Räder
- Bildung einer angenommenen Fahrzeuggeschwindigkeit (ve) durch Integration der angenommenen Fahrzeugbeschleunigung (ae),
- Korrektur der angenommenen Fahrzeuggeschwindigkeit (ve) oder -beschleunigung (ae) in Abhängigkeit von der Übereinstimmung der Tendenzen der angenommenen Werte mit den aus den gemessenen Momentangeschwindigkeiten (v(i)) abgeleiteten Bewegungsgrößen.

2. Verfahren nach Anspruch 1, gekennzeichnet dadurch, daß bei der Bildung der ersten Radbeschleunigungen (ad(i)) folgende Schritte durchgeführt werden :
- Bildung von zwei mittleren Geschwindigkeitswerten aus einem mehr und einem weniger zurückliegenden Zeitintervall und
- Bildung des Gradienten zwischen ihnen.

3. Verfahren nach Anspruch 1, gekennzeichnet dadurch, daß der positive und der negative Grenzwert der Radbeschleunigungsänderung verändert wird, wenn sich die Bedingungen der möglichen Änderungsgeschwindigkeit der tatsächlichen Fahrzeugbeschleunigung ändern oder wenn sich die Wahrscheinlichkeit der Übereinstimmung von Radbeschleunigung und tatsächlicher Fahrzeugbeschleunigung ändert, wobei größere Grenzwerte gewählt werden, wenn größere Änderungsgeschwindigkeiten zu erwarten sind und kleinere, wenn eine kleine Wahrscheinlichkeit vorliegt.

4. Verfahren nach Anspruch 1, gekennzeichnet dadurch, daß im Verfahrensschritt der Korrektur der angenommenen Fahrzeugbeschleunigung (ae) diese um einen Betrag vergrößert oder verkleinert wird, wenn bei der Auswertung der Bewegungsgrößen des Fahrzeuges festgestellt wird, daß eine plötzliche Änderung deren Tendenz begonnen hat, die durch eine auf das Fahrzeug wirkende zusätzliche Kraft verursacht wird.

5. Verfahren nach Anspruch 1, gekennzeichnet dadurch, daß im Verfahrensschritt der Korrektur der angenommenen Fahrzeuggeschwindigkeit (ve) und -beschleunigung (ae) eine Gleichsetzung der angenommenen Fahrzeuggeschwindigkeit (ve) mit einer Momentangeschwindigkeit (v(i)) eines Rades erfolgt, wenn das Vorzeichen der Differenz beider nicht dem Vorzeichen der Fahrzeugbeschleunigung entspricht oder wenn sich das Rad in einem schlupfarmen Bewegungszustand befindet, dabei die durch die Gleichsetzung hervorgerufene Änderung der angenommenen Fahrzeuggeschwindigkeit (ve) gemessen und daraus ein Korrekturzuschlag für die angenommene Fahrzeugbeschleunigung (ae) gebildet wird, dessen Vorzeichen und Größe der Änderung entspricht.

## Claims

1. Process for determining the speed of a vehicle with limited-slip wheels, comprising the steps of:
- determination of the instantaneous speed (**v(i)**) of the wheels
- evaluation and storage of the instantaneous speeds (**v(i)**) and variables of motion derived therefrom
- determination of the wheel slip
- control of a turning moment at the wheels to set up a desired wheel slip
characterized by the following process steps:
- forming first wheel accelerations (**ad(i)**) from the filtered instantaneous speeds (**v(i)**),
- forming second wheel acceleration values (**aq(i)**) from the first ones, by the condition that their change with reference to an earlier value of an assumed vehicle acceleration (**ae**) does not overstep a positive and a negative limit value,
- forming the assumed vehicle acceleration (**ae**) by averaging from the second wheel acceleration values (**aq(i)**) of all the wheels,
- forming an assumed vehicle speed (**ve**) by integration of the assumed vehicle acceleration (**ae**),
- correcting the assumed vehicle speed (**ve**) or acceleration (**ae**) in dependence on the agreement of the tendencies in the assumed values with the dynamic variables derived from the measured instantaneous speeds (**v(i)**).

2. Process according to claim 1, characterised in that in forming the first wheel accelerations (**ad(i)**) the following steps are carried out:
- forming two average speed values from one more and one less early time interval,
- forming the gradient between them.

3. Process according to claim 1, characterised in that the positive and the negative limit values of the change in the wheel acceleration are changed when the conditions of the possible rate of change of the actual vehicle acceleration change or when the probability of the agreement of wheel acceleration and actual vehicle acceleration changes, the limiting values selected being greater when greater rates of change are to be expected and smaller when there is a low probability.

4. Process according to claim 1, characterised in that in the process step of correcting the assumed vehicle acceleration (**ae**) the latter is increased or decreased by an amount if in the evaluation of the variables of motion of the vehicle it is established that a sudden change in their tendency has begun which has been caused by an additional force acting on the vehicle.

5. Process according to claim 1, characterised in that in the process step of correcting the assumed vehicle speed (**ve**) and acceleration (**ae**) the assumed vehicle speed (**ve**) is set equal to an instantaneous speed (**v(i)**) of a wheel if the sign of the difference between the two does not correspond to the sign of the vehicle acceleration or if the wheel is in a low-slip dynamic state, the change in the assumed vehicle speed (**ve**) brought about by the setting to equality being measured and a correction allowance for the assumed vehicle acceleration (**ae**) being formed therefrom, the sign and magnitude of which correspond to the change.

## Revendications

1. Procédé pour déterminer la vitesse d'un véhicule comportant des roues à régulation du glissement, comprenant les étapes suivantes :
- détermination de la vitesse instantanée (v(i)) des roues
- évaluation et mémorisation des vitesses instantanées (v(i)) et des grandeurs de déplacement qui en sont dérivées,
- détermination du glissement de roue.
- commande d'un couple appliqué aux roues pour le réglage d'un glissement de roue désiré,
caractérisé par les étapes opératoires suivantes:
- formation de premières accélérations de roue (ad(i)) à partir des vitesses instantanées filtrées (v(i)),
- formation de deux valeurs d'accélération de roue (aq(i)) à partir des premières valeurs d'accélération de roue conformement a la condition selon laquelle leur variation par rapport à une valeur précédente d'une accélération supposée (ae) du véhicule ne dépasse pas une valeur limite positive et une valeur limite négative,
- formation de l'accélération supposée (ae) du véhicule par formation de la valeur moyenne à partir des deux valeurs d'accélération (aq(i)) de toutes les roues,
- formation d'une vitesse supposée (ve) du véhicule par intégration de l'accélération supposée (ae) du véhicule
- correction de la vitesse supposée (ve) ou ce l'accélération supposée (ae) du véhicule en fonction de la coïncidence des tendances des valeurs mesurées avec les grandeurs de déplacement dérivées des vitesses instantanées mesurées (v(i)).

2. Procédé suivant la revendication 1, caractérisé par le fait que lors de la formation des premières accélérations de roue (ad(i)), on exécute les étapes suivantes :
- formation de deux valeurs de vitesse moyennes à partir d'un intervalle de temps précédent plus lointain et moins lointain, et
- formation du gradient entre ces valeurs

3. Procédé suivant la revendication 1, caractérisé par le fait que la valeur limite positive et la valeur limite négative de la variation d'accélération de roue est modifiée lorsque les conditions de la vitesse de variation possible de l'accélération effective du véhicule varient ou que la probabilité de la coïncidence entre l'accélération de roue et l'accélération effective du véhicule varie, auquel cas des valeurs limites plus élevées sont choisies lorsque l'on peut s'attendre à des vitesses de variation plus grandes et des valeurs limites plus faibles sont choisies lorsqu'on est en présence d'une faible probabilité.

4. Procédé suivant la revendication 1, caractérisé par le fait que lors de l'étape opératoire de correction de l'accélération supposée (ae) du véhicule, cette dernière est accrue ou réduite d'une certaine valeur lorsque, lors de l'évaluation des grandeurs de déplacement du véhicule, il est établi qu'une variation brusque de la tendance de ces valeurs, qui est provoquée par une force supplémentaire agissant sur le véhicule, a commencé.

5. Procédé suivant la revendication 1, caractérisé par le fait que lors de l'étape opératoire de correction de la vitesse supposée (ve) et de l'accélération supposée (ae) du véhicule, la vitesse supposée (ve) du véhicule est rendue égale à une vitesse instantanée (v(i)) d'une roues lorsque le signe de la différence entre ces deux vitesses ne correspond pas au signe de l'accélération du véhicule, ou lorsque la roue se trouve dans Un état ce déplacement avec un faible glissement, la variation, provoquée par cette égalisation, de la vitesse supposée (ve) du véhicule est mesurée et, à partir de là, un incrément de correction, dont le signe et la valeur absolue correspondent à la variation est formé pour l'accélération supposée (ae) du véhicule.
